# EUROPÄISCHE PATENTANMELDUNG

(11) **EP 4 420 864 A1**
(43) Veröffentlichungstag der Anmeldung: **28.08.2024**
(21) Anmeldenummer: 23158175.2
(22) Anmeldetag: 23.02.2023
(51) Int. Cl.: B29C 70/08, B32B 5/24, B32B 3/12, B62D 29/04, B29C 65/02, B29C 65/00, B29C 70/02, B29D 24/00, B62D 21/15, B29L 31/30

(54) **VERBUNDTEIL**

(71) Anmelder: GIWA GmbH, 86707 Westendorf (DE)
(72) Erfinder: SIEBERER, Daniel, 6020 Innsbruck (AT); BRAUN, Paul, 86695 Nordendorf (DE); HELD, Christian, 92342 Freystadt (DE)
(74) Vertreter: Torggler & Hofmann Patentanwälte - Innsbruck

(57) **Zusammenfassung**

Verbundteil (1) mit zumindest einem tragenden Kunststoffteil (2) mit einer Außenkontur (3), wobei die Außenkontur (3) zumindest einen Außenkonturbereich (4) aufweist, welcher bei einer Verformung (5) des Kunststoffteils (2) einer Zugbelastung aussetzbar ist, wobei zumindest an dem Außenkonturbereich (4) zumindest eine Matte (6)angeordnet ist, wobei die Matte (6) zumindest bereichsweise mit dem Außenkonturbereich (4) kraftübertragend verbunden ist und dazu ausgebildet ist, die durch die Verformung (5) auftretende Zugbelastung aufzunehmen und so der Verformung (5) des Kunststoffteils (2) entgegenzuwirken.

## Beschreibung

Die vorliegende Erfindung betrifft ein Verbundteil gemäß den Merkmalen des Oberbegriffs des Anspruchs 1.

Weiters betrifft die Erfindung eine Anordnung mit einem derartigen Verbundteil und ein Verfahren zur Herstellung eines derartigen Verbundteils.

Solche Verbundteile können in vielen verschiedenen Anwendungsbereichen ihren Einsatz finden. Beispielsweise können sie als dreidimensionale Formen, wie z.B. Sitze und Möbel in Leichtbauweise, Paletten für Logistikanwendungen, Schalungs-, Trag- oder Verstärkungselemente im Bauwesen oder als Böden für Fahrzeuganhänger eingesetzt werden.

Ähnliche Teile, welche dieselben Einsatzzwecke verfolgen können, jedoch in sich homogen und/oder monolithisch ausgebildet sind und daher keine Verbundteile sind, sind in den Schriften JP 2009208279 A und CN 202580582 U gezeigt. Dabei zeigt die JP 2009208279 A ein aus glasfaserverstärktem Kunststoff (GFK) bestehendes fachwerkartiges Tragelement in der Form eines Gitterrostes, welches insbesondere für Bauwerkskonstruktionen eingesetzt wird. Die CN 202580582 U zeigt ebenfalls einen GFK-Gitterrost, welcher insbesondere in der Fahrzeugindustrie eingesetzt wird.

Nachteilig bei den in diesen Schriften genannten Teilen ist, dass ihre Tragfähigkeit einerseits durch die Materialparameter und andererseits durch die Dimensionen begrenzt ist. Das heißt im Umkehrschluss, dass mittels Materialwahl und Wahl der Dimensionen, wie z.B. der Bauteilhöhe bei einem rein auf Biegung Belastetem Bauteil, wie z.B. bei einem konzeptuell gedachten Einfeldträger, die Tragfähigkeit erhöht und/oder die Verformung bzw. Durchbiegung reduziert werden kann.

Ist es jedoch gewünscht, z.B. aus ästhetischen Gründen, schlanke Teile zu verwenden und/oder, z.B. bei einem begrenzt vorhandenen Freiraum, die Tragfähigkeit bei gleichen Dimensionen zu erhöhen und/oder die Gebrauchstauglichkeit zu erhöhen, stoßen derartige Teile schnell an ihre Grenzen.

Die Aufgabe der vorliegenden Erfindung ist es daher, zum Stand der Technik verbesserte Teile bzw. Verbundteile mit erhöhter Tragfähigkeit und mit geringeren Verformungen bereitzustellen.

Diese Aufgabe wird durch die Merkmale des Anspruchs 1 gelöst, nämlich damit, dass zumindest an dem Außenkonturbereich zumindest eine Matte angeordnet ist, wobei die Matte zumindest bereichsweise mit dem Außenkonturbereich kraftübertragend verbunden ist und dazu ausgebildet ist, durch die Verformung auftretende Zugbelastung aufzunehmen und so der Verformung des Kunststoffteils entgegenzuwirken.

Der große Vorteil der Erfindung ist, dass die Tragfähigkeit des Verbundelements im Vergleich zu einem herkömmlichen, wie z.B. im Stand der Technik verwendeten, sortenreinem Teil mit identischen Dimensionen um ein Vielfaches höher ist.

Tests der Erfinderin haben gezeigt, dass das erfindungsgemäße Verbundteil im Vergleich zu einem sortenreinen Teil mit identischen Abmessungen dazu in der Lage ist, eine bis zu 3-fache Belastung aufzunehmen.

Ein weiterer Vorteil ist, dass auch die Verformungen deutlich geringer sind, da die Matte ein Vielfaches an Zugbelastungen bzw. -spannungen innerhalb des Verbundteils aufnehmen und übertragen kann und so einer Verformung bzw. Durchbiegung des Kunststoffteils entgegenwirkt. Da sich das Verbundteil im Vergleich zu einem sortenreinen Teil mit denselben Dimensionen unter Belastung deutlich weniger verformt bzw. durchbiegt, ist auch die Gebrauchstauglichkeit des Verbundteils deutlich höher, was insbesondere für begehbare und/oder befahrbare Tragkonstruktionen günstig sein kann.

Mit dem Verbundteil sind auch deutlich schlankere Ausbildungen bzw. Konstruktionen, beispielsweise dünnere Träger, Schalen, Platten, Freiformen etc., möglich, was z.B. einen ästhetischen Vorteil bei Bauwerkskonstruktionen mit sich bringen kann.

Dünnere bzw. schlankere Bau- bzw. Verbundteile bringen außerdem einen deutlich geringeren Materialaufwand mit sich, da Material eingespart werden kann. Insbesondere im Zusammenhang mit der Verwendung von Kunststoffmaterialien, wie im vorliegenden Fall, ist dies von Umwelt- und Ressourcen-technischer Relevanz.

Mit dünneren bzw. schlankeren Ausbildungen geht des Weiteren ein geringeres Eigengewicht einher, was aus statischer Perspektive für viele Anwendungen sehr günstig sein kann. Außerdem sind leichtere Bauteile einfacher handzuhaben.

Das tragende Kunststoffteil des Verbundteils ist im Wesentlichen als ein steifes Bauteil zu verstehen, welches im Wesentlichen elastisch und/oder relativ gering oder vernachlässigbar plastisch verformbar ist.

Das tragende Kunststoffteil kann prinzipiell jede Form aufweisen, wobei seine Außenkontur die umhüllende Oberfläche darstellt. Das heißt, etwaige Öffnungen, Aussparungen, Strukturen des Kunststoffteils sind von der Außenkontur umhüllt.

Der Außenkonturbereich der Außenkontur ist als jener Bereich der Außenkontur und Oberfläche des Kunststoffteils zu verstehen, welcher einer Zugbelastung aussetzbar ist bzw. entlang welchen Bereichs Zugspannungen auftreten können, wobei die Zugspannungen durch eine mittels einer Belastung verursachte Verformung des Kunststoffteils auftreten können.

Die zumindest bereichsweise mit dem Außenkonturbereich verbundene Matte ist im Wesentlichen zumindest eine zumindest bereichsweise und/oder temporär flexible Matte, Lage, Folie, z.B. SGP-Folie, oder dergleichen, welche in ihrer Form insbesondere dem Außenkonturbereich anpassbar ist.

Es ist auch möglich, dass die Matte für bestimmte Einsatzzwecke zumindest teilweise steif und/oder hart, erhärtet oder und/oder aushärtbar sein kann.

Weitere vorteilhafte Ausführungsformen der Erfindung werden in den abhängigen Ansprüchen definiert.

Es ist besonders bevorzugt vorgesehen, dass die Außenkontur wenigstens eine vom zumindest einen Außenkonturbereich, vorzugsweise durch eine Dicke des Kunststoffteils, beabstandete Kraftangriffsfläche aufweist, wobei das Kunststoffteil durch Einwirken einer äußeren Kraft auf die Kraftangriffsfläche, insbesondere im Wesentlichen elastisch, verformbar ist.

Es ist auch denkbar, dass das Kunststoffteil durch die Einwirkung wenigstens einer inneren Kraft, wie z.B. einer Temperaturbelastung, verformbar ist.

Unter der Dicke des Kunststoffteils kann beispielsweise eine konstante und/oder durchschnittliche Dicke verstanden werden.

Insbesondere ist jene Dicke des Kunststoffteils als Dicke zu verstehen und/oder heranzuziehen und/oder relevant, welche das aufnehmbare Moment einer Durchbiegung zufolge einer vorherrschenden Belastung definiert. Bei einem Verbundteil in der Form eines konzeptuell gedachten Einfeldträgers wäre die Dicke die Höhe des Bauteils, also jene Dicke welche die Kraftangriffsfläche vom Außenkonturbereich beabstandet.

Im Allgemeinen ist eine veränderliche Dicke möglich, wobei beispielsweise partielle Dicken- oder Höhensprünge, insbesondere zur Erhöhung der aufnehmbaren Kraft, denkbar sind. Dabei können beispielsweise einzelne oder mehrere Rippen oder Streben dicker, dünner, länger, kürzer, höher oder niedriger als andere Rippen oder Streben ausgebildet sein.

An der Kraftangriffsfläche können eine oder mehrere Einzellasten bzw. punktuelle Lasten und/oder eine oder mehrere Flächenlasten angreifen.

Es ist besonders bevorzugt vorgesehen, dass das Kunststoffteil mit einer Verstrebung und/oder Verrippung mit, insbesondere regelmäßig angeordneten, Streben und/oder Rippen ausgebildet ist und/oder in der Form eines Gitterrostes ausgebildet ist.

Die Verstrebung und/oder Verrippung kann beispielsweise mit zueinander parallelen Streben und/oder Rippen ausgebildet sein und/oder eine Wabenstruktur aufweisen.

Es kann vorgesehen sein, dass das Kunststoffteil zumindest bereichsweise eine Umrandung, vorzugsweise eine Umrandung einer Verstrebung und/oder Verrippung und/oder eines Gitterrostes, aufweist, insbesondere wobei die Umrandung als eine Begrenzung des Kunststoffteils verstanden werden kann.

Es ist besonders bevorzugt vorgesehen, dass die wenigstens eine Matte vollständig mit dem Außenkonturbereich des Kunststoffteils kraftübertragend, insbesondere Zugkraftübertragend, verbunden ist.

Es kann auch vorgesehen sein, dass die wenigstens eine Matte nur an der Umrandung und/oder an kleineren Teilbereichen des Außenkonturbereichs kraftübertragend verbunden ist.

Es ist bevorzugt vorgesehen, dass die kraftübertragende Verbindung zwischen der Matte und dem Kunststoffteil stoffschlüssig, insbesondere chemisch und/oder thermisch stoffschlüssig, beispielsweise mittels Schweißens, Klebens, Vulkanisierens, Laminierens, Beschichtens, Umspritzens und/oder mittels Einbettung, hergestellt ist.

Es ist auch denkbar, dass die kraftübertragende Verbindung zwischen der Matte und dem Kunststoffteil zumindest bereichsweise reib- bzw. kraftschlüssig und/oder formschlüssig hergestellt ist.

Es ist besonders bevorzugt vorgesehen, dass das Kunststoffteil ein mittels eines Formgebungsverfahrens hergestelltes Formgebungsteil, insbesondere Spritzgießteil oder Strangguss-profil, ist.

Unter Formgebungsverfahren können Spritzgieß-, Spritzpress-, Spritzschäum-, Press- oder Stranggussverfahren und dergleichen verstanden werden.

Es ist besonders bevorzugt vorgesehen, dass das Kunststoffteil zumindest aus wenigstens einem thermoplastischen, insbesondere amorphen oder teilkristallinen, und/oder technischen und/oder bio-basierten Kunststoff besteht.

Auch recycelte Materialtypen, z.B. als Post-Consumer-Recycled-Material (PCR) und/oder Post-Industrial-Recycled-Material (PIR), können in Anwendungsfällen eingesetzt werden.

Des Weiteren ist es denkbar, dass das Kunststoffteil einen Holzanteil aufweist, d.h. aus einem Kunststoff-Holz-Gemisch besteht.

Es kann vorgesehen sein, dass das Kunststoffteil zumindest teilweise aus wenigstens einem Füllstoff besteht.

Füllstoffe können z.B. Glasfasern, Basaltfasern, Glasbällchen, Schlagzähmodifikator, Flammschutzadditive, mineralische Additive, Naturfasern, Nanomaterial, wie z.B. Wolfram-Pulver, etc. sein.

Es ist bevorzugt vorgesehen, dass der Anteil der Summe aller Füllstoffe größer als 3 %, vorzugsweise größer als 8 %, besonders bevorzugt größer als 10 %, eines Gesamtvolumens und/oder einer Gesamtmasse des Kunststoffteils beträgt.

Es ist besonders bevorzugt vorgesehen, dass die Matte zumindest teilweise aus Fasern, insbesondere umfassend Aramid-, Glas-, Karbon- und/oder Basaltfasern, besteht.

Die Fasern können als lose bzw. einzelne Fasern und/oder in Form wenigstens eines Fasergewebes, Fasergeleges oder dergleichen in der Matte enthalten sein.

Denkbar sind dabei beispielsweise Aramidgewebe, Biaxial-Glasgelege, Carbongelege, Designgewebe, Glasfasermatten, Glasfilamentgewebe, Hybridgebe und/oder Basaltfasergewebe.

Es ist bevorzugt vorgesehen, dass die Matte zumindest teilweise aus wenigstens einem Harz besteht und/oder mit einem Harz, Kleber oder dergleichen verbindbar und/oder aushärtbar ist.

Denkbare Möglichkeiten sind dabei insbesondere Epoxidharz, Polyesterharz, Polyurethanharz und/oder andere Kunstharze.

Es kann vorgesehen sein, dass die Außenkontur des Verbundteils zumindest bereichsweise eine glatte und/oder raue und/oder strukturierte Oberflächenbeschaffenheit aufweist.

Die Oberfläche der Matte und/oder des Kunststoffteils kann je nach Einsatzzweck bzw. Anwendung ausgebildet sein. Beispielsweise kann die Matte und/oder das Kunststoffteil mittels einer gummierten und/oder rauen Oberflächenbeschaffenheit rutschfest ausgebildet sein.

Es ist bevorzugt vorgesehen, dass das Kunststoffteil eine im Wesentlichen plattenförmige Außenkontur mit ebenen Außenkonturflächen aufweist, sodass das Kunststoffteil beispielsweise als scheiben-, platten-, wand- oder palettenartige Trag- und/oder Stützvorrichtung verwendet werden kann.

In einem typischen Anwendungsfall des Verbundteils, beispielsweise als palettenartige Tragvorrichtung, kann das Verbundteil 180 cm lang, 60 cm breit und 3 cm dick sein und/oder Streben mit einem Rasterabstand von 60 cm in Längsrichtung aufweisen.

Das Kunststoffteil kann auch eine gewölbte Außenkontur mit zumindest einer gewölbten Außenkonturfläche aufweisen, sodass das Kunststoffteil beispielsweise als dreidimensionale Negativform verwendet werden kann.

Das Kunststoffteil kann dabei eine im Wesentlichen konstante Dicke aufweisen, wobei zumindest jeweils zwei der Außenkonturflächen im Wesentlichen parallel zueinander angeordnet sind.

Das Kunststoffteil kann aber auch eine veränderliche Dicke aufweisen, wobei beispielsweise bereichsweise eine größere Dicke in Bereichen erhöhter Belastung vorgesehen werden kann, um beispielsweise bereichsweise eine höhere Steifigkeit des Kunststoffteils zu erzielen.

Um eine zumindest bereichsweise höhere Steifigkeit des Kunststoffteils zu erzielen, können auch zusätzliche Rippen und/oder Streben vorgesehen sein.

Es kann vorgesehen sein, dass die Außenkontur wenigstens eine kraftübertragende Lage aufweist, welche zumindest bereichsweise kraftübertragend mit der Außenkontur verbunden ist.

Insbesondere kann die kraftübertragende Lage zur Aufnahme von Druckkräften bzw. -spannungen ausgebildet sein, wobei die kraftübertragende Lage prinzipiell jede Form aufweisen kann.

Es ist denkbar, dass die kraftübertragende Lage eine konstante Dicke aufweist und/oder massiv ausgebildet ist; sie kann aber auch zumindest bereichsweise hohl sein und/oder mittels Streben und/oder Rippen ausgebildet sein.

Schutz wird auch begehrt für eine Anordnung mit wenigstens einer Lagerstelle, mittels welcher wenigstens ein Verbundteil in einer stabilen Gleichgewichtslage gelagert oder lagerbar ist, wobei das Verbundteil durch eine äußere Kraft belastbar und, insbesondere im Wesentlichen elastisch, zumindest in Richtung einer Kraftaufbringungsrichtung verformbar ist.

Eine derartige Anordnung kann auch als ein möglicher Lastfall verstanden werden, bei welchem das Verbundteil auf eine bestimmte Weise lagerbar ist und einer vorbestimmten Belastung aussetzbar ist.

Beispielsweise kann das Kunststoffteil vollflächig und/oder im Wesentlichen punktuell oder bereichsweise linear und/oder flächig an zumindest einer Lagerstelle gelagert sein, wobei die Lagerung rotatorisch und/oder verschieblich fixiert oder frei sein kann.

Beispielsweise kann die Anordnung wenigstens zwei voneinander beabstandete Lagerstellen umfassen, wobei das wenigstens eine Verbundteil mittels der wenigstens zwei Lagerstellen lagerbar ist.

Es kann sein, dass die wenigstens zwei Lagerstellen durch wenigstens einen Hohlraum voneinander beabstandet sind, und wobei der zumindest eine Außenkonturbereich des wenigstens einen Verbundteils dem wenigstens einen Hohlraum zugewandt ist. Dieser Fall tritt insbesondere dann auf, wenn das Verbundteil, insbesondere das Kunststoffteil, unter Belastung in Richtung des Hohlraums verformbar bzw. durchbiegbar ist, was beispielsweise bei einer, insbesondere einfeldrigen, Brücken-artigen Anordnung der Fall sein kann.

Des Weiteren wird Schutz begehrt für ein Verfahren zum Herstellen eines Verbundteils, gekennzeichnet durch die folgenden Verfahrensschritte:
- es werden wenigstens ein Kunststoffteil, vorzugsweise durch einen Formgebungsprozess, insbesondere durch Spritzgießen, und wenigstens eine Matte bereitgestellt,
- die wenigstens eine Matte wird zumindest bereichsweise mit dem Außenkonturbereich des Kunststoffteils, insbesondere mittels Schweißens, Klebens, Vulkanisierens, Laminierens, Beschichtens, Umspritzens und/oder mittels Einbettung, kraftübertragend, insbesondere stoffschlüssig und/oder formschlüssig, verbunden.

Besonders bevorzugt ist es vorgesehen, dass im Zuge des genannten Verfahrens
- das wenigstens eine Kunststoffteil mittels eines Formgebungsverfahrens, insbesondere Spritzgießverfahrens, hergestellt wird und/oder
- auf die Matte wenigstens ein Harz, insbesondere Epoxidharz, insbesondere mittels Laminierens, aufgebracht wird.

Die Matte kann in einem Betriebszustand verformbar und/oder im Wesentlichen starr bzw. steif sein.

Weitere Vorteile und Einzelheiten vorteilhafter Ausführungsbeispiele der Erfindung ergeben sich aus den Figuren sowie der dazugehörigen Figurenbeschreibung. Dabei zeigen:
Fig. 1-2 ein erstes Ausführungsbeispiel eines Verbundteils,
Fig. 3 ein erstes Ausführungsbeispiel eines Kunststoffteils,
Fig. 4 ein zweites Ausführungsbeispiel eines Verbundteils,
Fig. 5 ein drittes Ausführungsbeispiel eines Verbundteils,
Fig. 6-7 eine mögliche Anordnung mit dem ersten Ausführungsbeispiel eines Verbundteils und
Fig. 8-11 weitere mögliche Anordnungen mit verschiedenen Ausführungsbeispielen eines Verbundteils.

Zunächst sei gesagt, dass alle Figuren schematische Darstellungen ohne jegliche Maßstabstreue sind. So sind z.B. die Dimensionen, insbesondere die Dicke 7 des Kunststoffteils 2 und die Dicke der Matte 6, beliebig gewählt und entsprechen daher auch nicht den tatsächlichen relativen Dimensionen zueinander. In manchen Figuren ist die Matte 6 lediglich durch eine dünne Schicht bzw. Linie repräsentiert.

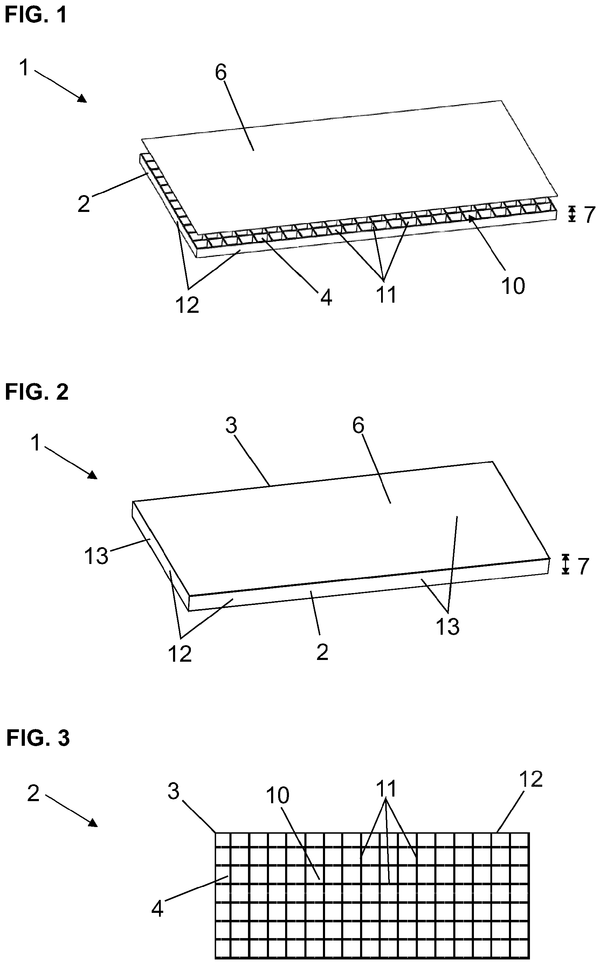

Die Fig. 1 und 2 zeigen ein erstes Ausführungsbeispiel eines Verbundteils 1 mit einem tragenden Kunststoffteil 2 mit einer Außenkontur 3, wobei die Außenkontur 3 zumindest einen Außenkonturbereich 4 aufweist, welcher bei einer Verformung 5 des Kunststoffteils 2 einer Zugbelastung, insbesondere lokal innerhalb des Kunststoffteils 2 auftretenden Zugspannungen, aussetzbar ist, wobei an dem Außenkonturbereich 4 zumindest eine Matte 6 angeordnet ist und wobei die Matte 6 zumindest bereichsweise mit dem Außenkonturbereich 4 kraftübertragend verbunden ist.

Die Fig. 1 zeigt dabei eine Explosionsdarstellung, wobei das Kunststoffteil 2 und die Matte 6 voneinander beabstandet dargestellt sind. Die Fig. 2 zeigt das Verbundteil 1, wobei die Matte 6 kraftübertragend mit dem Kunststoffteil 2 verbunden ist.

Bei diesem Ausführungsbeispiel ist das Kunststoffteil 2 mit einer Verstrebung 10 mit regelmäßig angeordneten Streben 11 als Gitterrost ausgebildet.

Im Allgemeinen kann das Kunststoffteil 2 aber jede beliebige Form aufweisen, wobei massive und/oder hohle Querschnitte, die Anordnung von Streben und/oder Rippen, konstante und/oder veränderliche Dimensionen etc. möglich sind.

Bei diesem Ausführungsbeispiel weist das Kunststoffteil 2 bzw. der Gitterrost eine durchgängige Umrandung 12 auf.

Prinzipiell ist eine Umrandung 12 aber nicht notwendig. Die Umrandung 12 kann auch nur bereichsweise vorhanden sein.

Bei diesem Ausführungsbeispiel ist die wenigstens eine Matte 6 vollständig mit dem Außenkonturbereich 4 des Kunststoffteils 2 kraftübertragend verbunden. Das heißt, dass die Matte 6 an zumindest einer der größtmöglichen Außenkonturflächen 13 des Kunststoffteils 2 mit dem Kunststoffteil 2 verbunden ist, wobei der Bereich der Verbindung eine gitterförmige Kontur aufweist.

Prinzipiell kann die wenigstens eine Matte 6 aber auch nur bereichsweise mit dem Kunststoffteil 2 kraftübertragend verbunden sein.

Beispielsweise kann die Matte 6 mit der Umrandung 12 des Kunststoffteils 2 mit dem Kunststoffteil 2 kraftübertragend verbunden sein.

Die Matte 6 kann auch nur an einem Teilbereich oder an mehreren Teilbereichen des Außenkonturbereichs 4 mit dem Kunststoffteil 2 verbunden sein.

Die kraftübertragende Verbindung zwischen der Matte 6 und dem Kunststoffteil 2 ist vorzugsweise stoffschlüssig, insbesondere chemisch und/oder thermisch stoffschlüssig, und/oder formschlüssig und/oder kraftschlüssig ausgebildet, wobei die Verbindung beispielsweise mittels Schweißens, Klebens, Vulkanisierens, Laminierens, Beschichtens, Umspritzens und/oder mittels Einbettung herstellbar ist.

Zur Darstellung in den Fig. 1 und 2 sei angemerkt, dass die Matte 6 bei diesem Ausführungsbeispiel oben am Kunststoffteil 2 angeordnet ist, sie also insbesondere einer Verformung 5 bzw. Durchbiegung nach oben und den dabei auftretenden Zugspannungen an der Oberseite entgegenwirkbar ist, insbesondere wenn die Durchbiegung in einem mittleren Bereich des Verbundteils 1 erfolgt. Wäre das Verbundteil 1 umgedreht ausgerichtet, sodass die Matte 6 an der Unterseite des Kunststoffteils 2 angeordnet ist, so wäre die Matte 6 insbesondere dazu ausgebildet, einer Verformung 5 bzw. Durchbiegung nach unten entgegenzuwirken.

Bei diesem Ausführungsbeispiel weist das Kunststoffteil 2 eine im Wesentlichen plattenförmige Außenkontur 3 mit ebenen Außenkonturflächen 13 auf, wobei jeweils zwei der ebenen Außenkonturflächen 13 im Wesentlichen parallel zueinander angeordnet sind.

Die Fig. 2 zeigt das in der Fig. 1 gezeigte erste Ausführungsbeispiel eines Verbundteils 1 im verbundenen Zustand, in welchem die Matte 6 mit dem Kunststoffteil 2 verbunden ist. Die gezeigten Konturen des Verbundteils 1 und/oder Kunststoffteils 2 entsprechen dabei der Außenkontur 3 des Kunststoffteils 2.

Bei den nun folgenden Beschreibungen der in den folgenden Figuren gezeigten Ausführungsbeispiele wird zur Vermeidung von Wiederholungen vorrangig auf die Unterschiede zum ersten Ausführungsbeispiel eingegangen. Ansonsten gilt die obige Beschreibung des ersten Ausführungsbeispiels soweit anwendbar auch für alle nachfolgend noch beschriebenen Ausführungsbeispiele.

Die Fig. 3 zeigt ein erstes Ausführungsbeispiel eines Kunststoffteils 2 in einer Draufsicht, wobei das Kunststoffteil 2 ähnlich wie im in der Fig. 1 gezeigten Ausführungsbeispiel eine Verstrebung 10 mit regelmäßigen Streben 11 aufweist, sodass das Kunststoffteil 2 im Wesentlichen ein Gitterrost mit einer Umrandung 12 ist.

Der Außenkonturbereich 4, mit welchem eine Matte 6 zumindest bereichsweise kraftübertragend mit dem Kunststoffteil 2 verbindbar ist, besitzt hier eine ebene Gitterform bzw. - kontur.

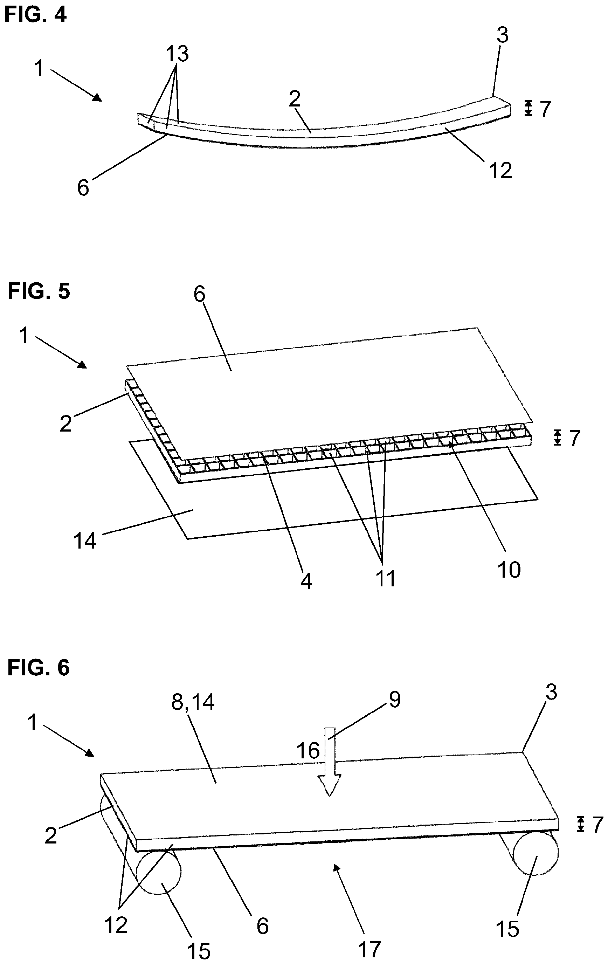

Die Fig. 4 zeigt ein zweites Ausführungsbeispiel eines Verbundteils 1, bei welchem das Kunststoffteil 2 eine gewölbte Außenkontur 3 mit gewölbten Außenkonturflächen 13 aufweist, wobei jeweils zwei der gewölbten Außenkonturflächen 13 im Wesentlichen parallel und/oder versetzt zueinander angeordnet sind.

Bei dieser Darstellung ist die Matte 6 an der Unterseite des Kunststoffteils 2 angeordnet, sodass die Matte 6 einer etwaigen Verformung 5 bzw. Auslenkung des Kunststoffteils 2 nach unten entgegenwirkbar ist, insbesondere wenn die Verformung 5 in einem mittleren Bereich des Kunststoffteils 2 stattfindet.

Die Fig. 5 zeigt ein drittes Ausführungsbeispiel eines Verbundteils 1, bei welchem an einer Seite des Kunststoffteils 2 eine kraftübertragende Lage 14 angeordnet ist, welche zumindest bereichsweise kraftübertragend mit der Außenkontur 3 des Kunststoffteils 2 verbunden ist.

Die kraftübertragende Lage 14 ist günstigerweise zur Aufnahme von Druckkräften und/oder zur Aussteifung des Kunststoffteils 2 ausgebildet.

Bei dieser Darstellung befindet sich die Matte 6 an der Oberseite und die kraftübertragende Lage 14 an der Unterseite des Kunststoffteils 2, sodass die Matte 6 und die kraftübertragende Lage 14 insbesondere einer Verformung 5 bzw. Durchbiegung des Kunststoffteils 2 nach oben entgegenwirkbar ist.

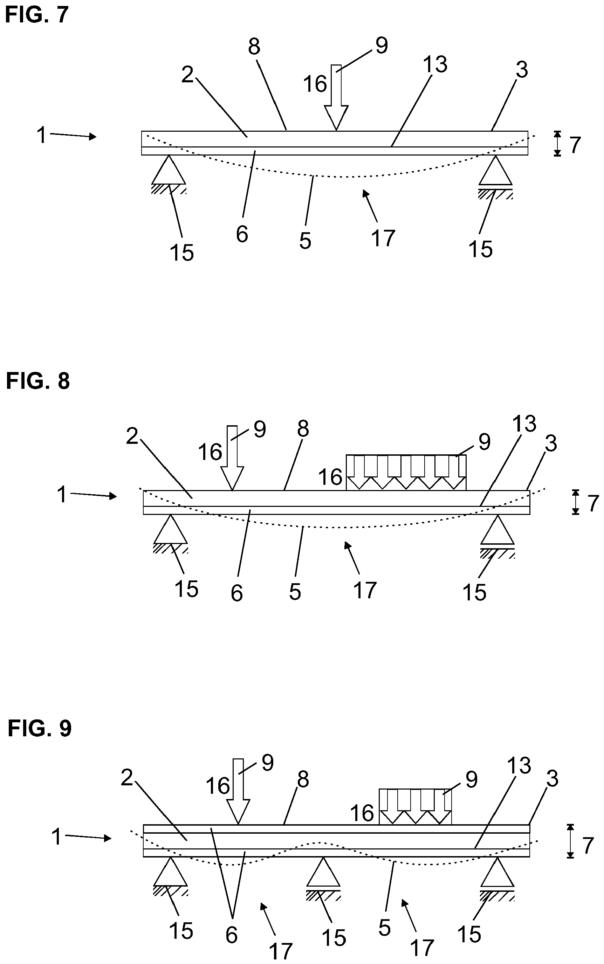

Die Fig. 6 und 7 zeigen zwei Darstellungen einer möglichen Anordnung mit dem ersten Ausführungsbeispiel eines Verbundteils 1, wobei die Fig. 6 eine perspektivische Ansicht und die Fig. 7 eine Seitenansicht darstellen.

Bei dieser bevorzugten Variante einer Anordnung ist das Verbundteil 1 mittels zweier mittels eines Hohlraums 17 voneinander beabstandet angeordneten Lagerstellen 15 in einer Gleichgewichtslage angeordnet.

Bei diesem Ausführungsbeispiel ist die Kraftangriffsfläche 8 durch eine Dicke 7 des Kunststoffteils 2 vom zumindest einen Außenkonturbereich 4 der Außenkontur 3 beabstandet, wobei das Kunststoffteil 2 durch Einwirken einer äußeren Kraft 9 auf die Kraftangriffsfläche 8, insbesondere im Wesentlichen elastisch, verformbar ist.

Bei diesem Ausführungsbeispiel ist die Matte 6 an der Unterseite des Kunststoffteils 2 angeordnet, sodass die Matte 6 einer an der Oberseite angreifenden Druckkraft bzw. äußeren Kraft 9 mit einer nach unten gerichteten Kraftaufbringungsrichtung 16 und der dadurch auftretenden Verformung 5 nach unten entgegenwirkbar ist.

Die Fig. 8-11 zeigen weitere mögliche Anordnungen mit verschiedenen Ausführungsbeispielen eines Verbundteils 1.

Die Fig. 8 zeigt eine Anordnung, bei welcher das Verbundteil 1 gleich wie bei der in den Fig. 8 und 7 gezeigten Variante gelagert ist und wobei eine Matte 6 entlang der gesamten Unterseite des Kunststoffteils 2 angeordnet ist.

Bei diesem Ausführungsbeispiel greifen eine Einzellast und eine Flächenlast als äußere Kräfte 9 an der Kraftangriffsfläche 8 des Verbundteils 1 bzw. der Außenkontur 3 an.

Die Fig. 9 zeigt eine Anordnung, bei welcher ein Ausführungsbeispiel eines Verbundteils 1 mittels drei Lagerstellen 15 gelagert ist, wobei zwei Hohlräume 17 zwischen den Lagerstellen 15 vorhanden sind.

Bei diesem Verbundteil 1 sind sowohl an der Oberseite und/oder Kraftangriffsfläche 8 als auch an der Unterseite des Kunststoffteils 2 jeweils eine Matte 6 entlang der gesamten Oberfläche bzw. am gesamten Außenkonturbereich 4 angeordnet.

An den Feldern über den zwei Hohlräumen 17 greifen eine Einzellast und eine Flächenlast als äußere Kräfte an 9, wobei das Verbundteil 1 die qualitativ dargestellte Verformung 5 aufweist. Diese speziell bei diesem Fall vorhandene Verformung 5 bedingt Zugbelastungen bzw. -spannungen an der Oberseite des Kunststoffteils 2 über der mittleren Lagerstelle 15 und an den Unterseiten des Kunststoffteils 2 im Wesentlichen mittig in den zwei Feldern über den zwei Hohlräumen 17. Hier wirken beide Matten 6 der Verformung 5 des Verbundteils 1 entgegen.

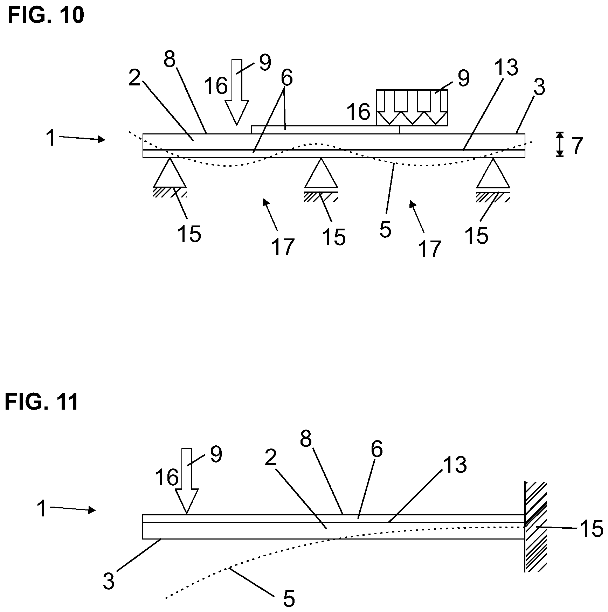

Die Fig. 10 zeigt eine Anordnung, bei welcher das Verbundteil 1 dieselbe wie in der Fig. 9 gezeigte Lagerung aufweist und identisch durch äußere Kräfte 9 belastet ist. Bei diesem Ausführungsbeispiel ist die obere Matte 6 an der Oberseite und/oder Kraftangriffsfläche 8 des Kunststoffteils 2 jedoch nur lokal über der mittleren Lagerstelle 15 angeordnet. Das heißt, die Matte 6 ist nur an jenem Außenkonturbereich 4 des Kunststoffteils 2 mit dem Kunststoffteil 2 zumindest teilweise kraftübertragend verbunden, wo Zugbelastungen bzw. -spannungen planmäßig auftreten.

Die Fig. 11 zeigt eine Anordnung, bei welcher ein Verbundteil 1 an einer einzigen Lagerstelle 15 so gelagert ist, dass das Verbundteil 1 translatorisch und rotatorisch unbeweglich eingespannt ist. Das Verbundteil 1 wirkt hier also konzeptuell entsprechend einem Kragarm, welcher sich unter einer Belastung durch eine äußere Kraft 9 in eine Richtung durchbiegt bzw. verformt.

Bei diesem Ausführungsbeispiel einer Anordnung und eines Verbundteils 1 verformt sich das Verbundteil 1 im Wesentlichen in Richtung einer Kraftaufbringungsrichtung 16 einer Einzellast bzw. äußeren Kraft 9 nach unten. Die Matte 6 ist bei diesem Ausführungsbeispiel an der Oberseite und/oder Kraftangriffsfläche 8 des Kunststoffs angeordnet, sodass sie die durch die Verformung 5 auftretende Zugspannungen aufnimmt und der Verformung 5 entgegenwirkt.

Grundsätzlich sind viele weitere Anordnungen und Ausbildungen des Verbundteils möglich. Das Verbundteil kann so ausgebildet sein, dass es einer vorbestimmten Anordnung, Lagerung, Belastung bestmöglich aussetzbar ist, sodass die Tragfähigkeit hoch und/oder die Verformung gering sein kann.

## Patentansprüche

1. Verbundteil (1) mit zumindest einem tragenden Kunststoffteil (2) mit einer Außenkontur (3), wobei die Außenkontur (3) zumindest einen Außenkonturbereich (4) aufweist, welcher bei einer Verformung (5) des Kunststoffteils (2) einer Zugbelastung aussetzbar ist, **dadurch gekennzeichnet, dass** zumindest an dem Außenkonturbereich (4) zumindest eine Matte (6)angeordnet ist, wobei die Matte (6) zumindest bereichsweise mit dem Außenkonturbereich (4) kraftübertragend verbunden ist und dazu ausgebildet ist, die durch die Verformung (5) auftretende Zugbelastung aufzunehmen und so der Verformung (5) des Kunststoffteils (2) entgegenzuwirken.

2. Verbundteil (1) nach Anspruch 1, wobei die Außenkontur (3) wenigstens eine vom zumindest einen Außenkonturbereich (4), vorzugsweise durch eine Dicke (7) des Kunststoffteils (2), beabstandete Kraftangriffsfläche (8) aufweist, wobei das Kunststoffteil (2) durch Einwirken einer äußeren Kraft (9) auf die Kraftangriffsfläche (8), insbesondere im Wesentlichen elastisch, verformbar ist.

3. Verbundteil (1) nach einem der vorhergehenden Ansprüche, wobei das Kunststoffteil (2) mit einer Verstrebung (10) mit, insbesondere regelmäßig angeordneten, Streben (11) und/oder als Gitterrost ausgebildet ist und/oder zumindest bereichsweise eine Umrandung (12), vorzugsweise eine Umrandung (12) einer Verstrebung (10) und/oder eines Gitterrostes, aufweist.

4. Verbundteil (1) nach einem der vorhergehenden Ansprüche, wobei die wenigstens eine Matte (6) vollständig mit dem Außenkonturbereich (4) des Kunststoffteils (2) kraftübertragend verbunden ist.

5. Verbundteil (1) nach einem der vorhergehenden Ansprüche, wobei die kraftübertragende Verbindung zwischen der Matte (6) und dem Kunststoffteil (2) stoffschlüssig, insbesondere chemisch und/oder thermisch stoffschlüssig, und/oder formschlüssig und/oder kraftschlüssig, beispielsweise mittels Schweißens, Klebens, Vulkanisierens, Laminierens, Beschichtens, Umspritzens und/oder mittels Einbettung, hergestellt ist.

6. Verbundteil (1) nach einem der vorhergehenden Ansprüche, wobei das Kunststoffteil (2)
- ein mittels eines Formgebungsverfahrens hergestelltes Formgebungsteil, insbesondere Spritzgießteil oder Stranggussprofil, ist und/oder
- zumindest aus wenigstens einem thermoplastischen, insbesondere amorphen oder teilkristallinen, und/oder technischen und/oder bio-basierten Kunststoff besteht und/oder einen Holzanteil aufweist und/oder
- zumindest teilweise aus wenigstens einem Füllstoff, wie z.B. Glasfasern, Glasbällchen, Schlagzähmodifikator etc., besteht, insbesondere wobei der Anteil der Summe aller Füllstoffe größer als 3 %, vorzugsweise größer als 8 %, besonders bevorzugt größer als 10 %, eines Gesamtvolumens und/oder einer Gesamtmasse des Kunststoffteils (2) beträgt.

7. Verbundteil (1) nach einem der vorhergehenden Ansprüche, wobei die Matte (6) teilweise aus Fasern, insbesondere umfassend Aramid-, Glas-, Karbon- und/oder Basaltfasern, besteht, vorzugsweise wobei die Fasern als lose Fasern und/oder in Form wenigstens eines Fasergewebes, Fasergeleges oder dergleichen in der Matte (6) enthalten sind.

8. Verbundteil (1) nach einem der vorhergehenden Ansprüche, wobei die Matte (6) zumindest aus wenigstens einem Harz besteht und/oder mit einem Harz verbindbar ist, insbesondere wobei das Harz ein Epoxidharz und/oder Polyesterharz, vorzugsweise Polyurethanharz, ist.

9. Verbundteil (1) nach einem der vorhergehenden Ansprüche, wobei die Außenkontur (3) zumindest bereichsweise eine glatte und/oder raue und/oder strukturierte Oberflächenbeschaffenheit aufweist.

10. Verbundteil (1) nach einem der vorhergehenden Ansprüche, wobei das Kunststoffteil (2) eine im Wesentlichen plattenförmige Außenkontur (3) mit ebenen Außenkonturflächen (13) und/oder eine gewölbte Außenkontur (3) mit gewölbten Außenkonturflächen (13) aufweist, vorzugsweise wobei zumindest jeweils zwei der ebenen Außenkonturflächen (13) und/oder der gewölbten Außenkonturflächen (13) im Wesentlichen parallel zueinander angeordnet sind.

11. Verbundteil (1) nach einem der vorhergehenden Ansprüche, wobei die Außenkontur (3) wenigstens eine kraftübertragende Lage (14) aufweist, welche zumindest bereichsweise kraftübertragend mit der Außenkontur (3) verbunden ist, vorzugsweise welche als eine zur Aufnahme von Druckkräften ausgebildete Platte ausgebildet ist.

12. Anordnung mit wenigstens einer Lagerstelle (15), mittels welcher wenigstens ein Verbundteil (1) nach einem der vorhergehenden Ansprüche in einer stabilen Gleichgewichtslage gelagert oder lagerbar ist, wobei das Verbundteil (1) durch eine äußere Kraft (9) belastbar und, insbesondere im Wesentlichen elastisch, zumindest in Richtung einer Kraftaufbringungsrichtung (16) verformbar ist.

13. Anordnung nach dem vorhergehenden Anspruch mit wenigstens zwei voneinander beabstandete Lagerstellen (15), wobei das wenigstens eine Verbundteil (1) mittels der Lagerstellen (15) gelagert ist, vorzugsweise wobei die wenigstens zwei Lagerstellen (15) durch wenigstens einen Hohlraum (17) voneinander beabstandet sind und wobei der zumindest eine Außenkonturbereich (4) des wenigstens einen Verbundteils (1) dem wenigstens einen Hohlraum (17) zugewandt ist.

14. Verfahren zum Herstellen eines Verbundteils (1) nach einem der Ansprüche 1 bis 11, **gekennzeichnet durch** die folgenden Verfahrensschritte:
- es werden wenigstens ein Kunststoffteil (2), vorzugsweise durch einen Formgebungsprozess, insbesondere durch Spritzgießen oder Strangguss, und wenigstens eine Matte (6) bereitgestellt,
- die wenigstens eine Matte (6) wird zumindest bereichsweise mit dem Außenkonturbereich (4) des Kunststoffteils (2), insbesondere mittels Schweißens, Klebens, Vulkanisierens, Laminierens, Beschichtens und/oder mittels Einbettung, kraftübertragend, insbesondere stoffschlüssig und/oder formschlüssig, verbunden.

15. Verfahren nach dem vorhergehenden Anspruch,
- wobei das wenigstens eine Kunststoffteil (2) mittels eines Formgebungsverfahrens, insbesondere Spritzgieß- oder Stranggussverfahrens, hergestellt wird und/oder
- wobei auf die Matte (6) wenigstens ein Harz, insbesondere Epoxidharz, insbesondere mittels Laminierens, aufgebracht wird.

## Geänderte Patentansprüche

### Geänderte Patentansprüche gemäss Regel 137(2) EPÜ.

1. Verbundteil (1) mit zumindest einem tragenden Kunststoffteil (2) mit einer Außenkontur (3), wobei die Außenkontur (3) zumindest einen Außenkonturbereich (4) aufweist, welcher bei einer Verformung (5) des Kunststoffteils (2) einer Zugbelastung aussetzbar ist, **dadurch gekennzeichnet, dass** die Außenkontur (3) wenigstens eine vom zumindest einen Außenkonturbereich (4) durch eine Dicke (7) des Kunststoffteils (2) beabstandete Kraftangriffsfläche (8) aufweist, wobei das Kunststoffteil (2) durch Einwirken einer äußeren Kraft (9) auf die Kraftangriffsfläche (8), insbesondere im Wesentlichen elastisch, verformbar ist, und wobei ausschließlich an dem Außenkonturbereich (4) zumindest eine Matte (6) angeordnet ist, wobei die Matte (6) zumindest bereichsweise mit dem Außenkonturbereich (4) kraftübertragend verbunden ist und dazu ausgebildet ist, die durch die Verformung (5) auftretende Zugbelastung aufzunehmen und so der Verformung (5) des Kunststoffteils (2) entgegenzuwirken.

2. Verbundteil (1) nach Anspruch 1, wobei das Kunststoffteil (2) mit einer Verstrebung (10) mit, insbesondere regelmäßig angeordneten, Streben (11) und/oder als Gitterrost ausgebildet ist und/oder zumindest bereichsweise eine Umrandung (12), vorzugsweise eine Umrandung (12) einer Verstrebung (10) und/oder eines Gitterrostes, aufweist.

3. Verbundteil (1) nach einem der vorhergehenden Ansprüche, wobei die wenigstens eine Matte (6) vollständig mit dem Außenkonturbereich (4) des Kunststoffteils (2) kraftübertragend verbunden ist.

4. Verbundteil (1) nach einem der vorhergehenden Ansprüche, wobei die kraftübertragende Verbindung zwischen der Matte (6) und dem Kunststoffteil (2) stoffschlüssig, insbesondere chemisch und/oder thermisch stoffschlüssig, und/oder formschlüssig und/oder kraftschlüssig, beispielsweise mittels Schweißens, Klebens, Vulkanisierens, Laminierens, Beschichtens, Umspritzens und/oder mittels Einbettung, hergestellt ist.

5. Verbundteil (1) nach einem der vorhergehenden Ansprüche, wobei das Kunststoffteil (2)
- ein mittels eines Formgebungsverfahrens hergestelltes Formgebungsteil, insbesondere Spritzgießteil oder Stranggussprofil, ist und/oder
- zumindest aus wenigstens einem thermoplastischen, insbesondere amorphen oder teilkristallinen, und/oder technischen und/oder bio-basierten Kunststoff besteht und/oder einen Holzanteil aufweist und/oder
- zumindest teilweise aus wenigstens einem Füllstoff, wie z.B. Glasfasern, Glasbällchen, Schlagzähmodifikator etc., besteht, insbesondere wobei der Anteil der Summe aller Füllstoffe größer als 3 %, vorzugsweise größer als 8 %, besonders bevorzugt größer als 10 %, eines Gesamtvolumens und/oder einer Gesamtmasse des Kunststoffteils (2) beträgt.

6. Verbundteil (1) nach einem der vorhergehenden Ansprüche, wobei die Matte (6) teilweise aus Fasern, insbesondere umfassend Aramid-, Glas-, Karbon- und/oder Basaltfasern, besteht, vorzugsweise wobei die Fasern als lose Fasern und/oder in Form wenigstens eines Fasergewebes, Fasergeleges oder dergleichen in der Matte (6) enthalten sind.

7. Verbundteil (1) nach einem der vorhergehenden Ansprüche, wobei die Matte (6) zumindest aus wenigstens einem Harz besteht und/oder mit einem Harz verbindbar ist, insbesondere wobei das Harz ein Epoxidharz und/oder Polyesterharz, vorzugsweise Polyurethanharz, ist.

8. Verbundteil (1) nach einem der vorhergehenden Ansprüche, wobei die Außenkontur (3) zumindest bereichsweise eine glatte und/oder raue und/oder strukturierte Oberflächenbeschaffenheit aufweist.

9. Verbundteil (1) nach einem der vorhergehenden Ansprüche, wobei das Kunststoffteil (2) eine im Wesentlichen plattenförmige Außenkontur (3) mit ebenen Außenkonturflächen (13) und/oder eine gewölbte Außenkontur (3) mit gewölbten Außenkonturflächen (13) aufweist, vorzugsweise wobei zumindest jeweils zwei der ebenen Außenkonturflächen (13) und/oder der gewölbten Außenkonturflächen (13) im Wesentlichen parallel zueinander angeordnet sind.

10. Verbundteil (1) nach einem der vorhergehenden Ansprüche, wobei die Außenkontur (3) wenigstens eine kraftübertragende Lage (14) aufweist, welche zumindest bereichsweise kraftübertragend mit der Außenkontur (3) verbunden ist, vorzugsweise welche als eine zur Aufnahme von Druckkräften ausgebildete Platte ausgebildet ist.

11. Anordnung mit wenigstens einer Lagerstelle (15), mittels welcher wenigstens ein Verbundteil (1) nach einem der vorhergehenden Ansprüche in einer stabilen Gleichgewichtslage gelagert oder lagerbar ist, wobei das Verbundteil (1) durch eine äußere Kraft (9) belastbar und, insbesondere im Wesentlichen elastisch, zumindest in Richtung einer Kraftaufbringungsrichtung (16) verformbar ist.

12. Anordnung nach dem vorhergehenden Anspruch mit wenigstens zwei voneinander beabstandete Lagerstellen (15), wobei das wenigstens eine Verbundteil (1) mittels der Lagerstellen (15) gelagert ist, vorzugsweise wobei die wenigstens zwei Lagerstellen (15) durch wenigstens einen Hohlraum (17) voneinander beabstandet sind und wobei der zumindest eine Außenkonturbereich (4) des wenigstens einen Verbundteils (1) dem wenigstens einen Hohlraum (17) zugewandt ist.

13. Verfahren zum Herstellen eines Verbundteils (1) nach einem der Ansprüche 1 bis 10, **gekennzeichnet durch** die folgenden Verfahrensschritte:
- es werden wenigstens ein Kunststoffteil (2), vorzugsweise durch einen Formgebungsprozess, insbesondere durch Spritzgießen oder Strangguss, und wenigstens eine Matte (6) bereitgestellt,
- die wenigstens eine Matte (6) wird zumindest bereichsweise mit ausschließlich dem Außenkonturbereich (4) des Kunststoffteils (2), insbesondere mittels Schweißens, Klebens, Vulkanisierens, Laminierens, Beschichtens und/oder mittels Einbettung, kraftübertragend, insbesondere stoffschlüssig und/oder formschlüssig, verbunden.

14. Verfahren nach dem vorhergehenden Anspruch,
- wobei das wenigstens eine Kunststoffteil (2) mittels eines Formgebungsverfahrens, insbesondere Spritzgieß- oder Stranggussverfahrens, hergestellt wird und/oder
- wobei auf die Matte (6) wenigstens ein Harz, insbesondere Epoxidharz, insbesondere mittels Laminierens, aufgebracht wird.
